# DEMANDE DE BREVET EUROPEEN

(11) **EP 4 764 242 A1**
(43) Date de publication de la demande: **24.06.2026**
(21) Numéro de dépôt: 25224848.9
(22) Date de dépôt: 18.12.2025
(51) Int. Cl.: F16C 19/52, F16C 41/00, G01L 5/00, G01M 13/045, G01M 13/04

(54) **DISPOSITIF DE ROULEMENT**

(30) Priorité: 20.12.2024 FR 2415010
(71) Demandeur: Commissariat à l'Énergie Atomique et aux Énergies Alternatives, 75015 Paris (FR)
(72) Inventeur: CAROFF, Tristan, 38054 GRENOBLE (FR); BRULAIS, Sébastien, 38054 GRENOBLE (FR); GASNIER, Pierre, 38054 GRENOBLE (FR); OTT, Célestin, 38054 GRENOBLE (FR)
(74) Mandataire: Ipsilon

(57) **Abrégé**

L'invention concerne un dispositif de roulement configuré pour être monté sur un support (20), le dispositif comportant :
- un roulement mécanique (60) comportant une première et une deuxième bague (62, 64, 162, 164) opposées et rotatives entre elles, la première bague (62, 64, 162, 164) étant configurée pour être fixe en rotation par rapport à un support (20),
- au moins un transducteur piézoélectrique (70) monté fixe par rapport à la première bague (62, 64, 162, 164), configuré pour s'étendre entre la première bague (62, 64, 162, 164) et le support (20) et configuré pour générer un signal lorsqu'il subit une contrainte selon un axe (M),
- une unité de mesure électronique (92) configurée pour recevoir le signal généré par le transducteur piézoélectrique (70) et en déduire au moins une information sur la contrainte selon l'axe (M) s'appliquant entre la première bague (62, 64, 162, 164) et le support (20).

## Description

La présente invention concerne un dispositif de roulement configuré pour être monté sur un support et comportant des moyens de mesure d'une contrainte radiale s'appliquant entre le support et un roulement. L'invention concerne également un procédé de mesure des contraintes appliquées radialement au dispositif de roulement et un procédé de mesure de l'usure d'un roulement du dispositif de roulement.

### Domaine technique

L'invention se situe dans le domaine des dispositifs incluant des roulements pour lesquels une mesure d'une contrainte radiale s'appliquant entre le roulement et le support est recherchée. Une telle mesure peut être recherchée, par exemple pour déterminer une force appliquée sur le roulement directement ou indirectement ou pour déterminer une usure du roulement. Elle peut être utile plus précisément sur les outils de déplacement à roue, notamment les vélos, rollers, skis sur roues, skates ou trottinettes, dans le cadre des outils de mesure personnels de la performance, qui regroupent les outils, les principes et les méthodes permettant à chacun de mesurer ses données personnelles, de les analyser et de les partager. Elle concerne également la mesure d'effort, l'autonomie des systèmes et l'intégration mécatronique.

### Technique antérieure

Il existe sur le marché des roulements instrumentés, mais les mesures réalisées sont relativement simples, principalement basées sur des encodeurs magnétiques en rotation permettant de mesurer notamment le nombre de tours, la vitesse de rotation, le sens de rotation, la position relative des deux bagues entre elles ou l'accélération de la rotation.

De manière générale, de telles solutions techniques permettant de mesurer des contraintes (notamment radiales) au niveau des roulements sont basées sur des mesures avec des jauges de contraintes et sont plutôt encombrantes, comme la solution proposée dans le brevet EP2577247B1 par exemple.

Il existe également des dispositifs relativement compacts permettant de mesurer l'effort radial exercé sur un axe de roulement, comme par exemple dans des pédales de vélo. Ces systèmes, comme ceux décrits dans les brevets DE10158600 B4, EP2299252 B1, FR3078158 A1, US20140273543 A1, US 2023/016206 et US20160052583, sont généralement basés sur la déformation d'un corps d'épreuve, formant le support, avec des jauges de déformations et/ou contraintes montées sur le corps d'épreuve. Cependant, ces systèmes sont relativement couteux, et ne s'intègre pas intégralement au sein du roulement, étant positionnés sur le corps d'épreuve formé notamment par un axe de la pédale.

Le brevet EP 2 841 781 B1 décrit un système de roulement complexe permettant de mesurer des caractéristiques liées au roulement, notamment la contrainte ou la température, basé sur deux roulements coaxiaux permettant récupérer de l'énergie via un système électromagnétique et de mesurer localement le niveau de contrainte sur ledit roulement via une jauge de contrainte interne au roulement. Ce système est relativement compact, mais complexe à fabriquer. Par ailleurs, pour la mesure de contrainte, il est nécessaire d'avoir une déformation locale d'un matériau au sein du roulement, ce qui peut être préjudiciable pour le fonctionnement à long terme dudit roulement.

DE 11 2007 001123 décrit un dispositif de roulements mécanique comportant un système de mesure de type piézorésistif des conditions de fonctionnement réelles d'un élément roulant dans une machine de fabrication ou de finition de produits en bande. Le roulement comporte une bague interne et une bague externe 16 et les détecteurs peuvent être sur les surface internes et externes des bagues externe ou interne. Une telle mesure permet de mesurer notamment la pression, la charge et la température pour surveiller les conditions des roulements et optimiser la lubrification. Il n'est pas question d'une mesure de contrainte par une capteur piézoélectrique.

Les brevets DE 100 61 923 et US 2007/277612 décrivent un roulement comportant des détecteurs de mesures de force et contrainte en particulier de type piézoélectriques. Les capteurs ne servent qu'à la détection de contrainte.

L'intégration d'une mesure de contrainte au niveau d'un roulement est complexe, notamment du fait de l'espace contraint, du maintien de la rigidité nécessaire pour assurer la transmission mécanique au sein du roulement et de la difficulté d'avoir une mesure précise et significative de ladite contrainte.

Il existe donc un besoin pour un dispositif alternatif de roulement permettant une mesure performante d'une contrainte appliquée entre un roulement et un support sur lequel le roulement est monté à faible coût, présentant une grande autonomie, peu de décharge passive, simple à fabriquer, léger, robuste et d'impact sur la rotation du roulement réduit.

Ainsi, il existe un besoin pour une mesure de la contrainte entre un roulement et un support, en combinant précision, autonomie énergétique, robustesse, et simplicité d'intégration.

Il existe également un besoin pour un dispositif de roulement comportant un système de mesure de l'état du roulement pour en faciliter la maintenance.

### Exposé de l'invention

L'invention propose de tirer profit des caractéristiques des transducteurs piézoélectriques pour réaliser un système intégré pour la mesure autonome de contrainte selon un axe sur un roulement qu'elle que soit sa taille.

L'invention répond à ce besoin à l'aide d'un dispositif de roulement configuré pour être monté sur un support s'étendant selon un axe longitudinal, le dispositif comportant :
- un roulement mécanique comportant une première et une deuxième bague opposées et rotatives entre elles, la première bague étant configurée pour être fixe en rotation par rapport à un support s'étendant selon un axe longitudinal,
- au moins un transducteur piézoélectrique monté fixe par rapport à la première bague, configuré pour s'étendre entre la première bague et le support et configuré pour générer un signal lorsqu'il subit une contrainte selon un axe de mesure,
- une unité de mesure électronique configurée pour recevoir le signal généré par le transducteur piézoélectrique et en déduire au moins une information sur la contrainte selon l'axe de mesure s'appliquant entre la première bague et le support.

Un tel dispositif de roulement présente plusieurs avantages techniques significatifs. Tout d'abord, l'intégration d'un transducteur piézoélectrique monté fixe par rapport à la première surface du roulement permet de mesurer directement la contrainte appliquée selon l'axe de mesure entre le support et ladite surface. Cette configuration offre une mesure précise et directe de la contrainte sans passer par la déformation d'un corps d'épreuve.

Les applications possibles de ce dispositif de roulement sont vastes. Par exemple, il peut être mis en place dans tous dispositifs nécessitant des roulements pour la mesure de l'usure des roulements en temps réel dans des secteurs tels que l'automobile, l'aéronautique et le ferroviaire, en mesurant les vibrations des roulements. En effet, un roulement usé produit des vibrations qui génèrent une contrainte périodique entre le roulement et le support. Il est alors possible de pouvoir mettre en place une alerte utilisateur lorsqu'un roulement est usé ou présente une vibration supérieure à un seuil.

Il peut également être employé pour la maintenance prévisionnelle sur des machines-outils et des moteurs, permettant de prévoir et de prévenir les défaillances avant qu'elles ne surviennent en identifiant la présence d'une contrainte et/ou charge non appropriée s'appliquant sur un roulement.

Dans le domaine des sports à roulement, comme le vélo, le roller, le ski-roue, le skate et la trottinette, ce dispositif peut offrir des mesures précises de l'effort appliqué, améliorant ainsi la performance et la sécurité des équipements. Il permet notamment la mesure de performance du cycliste dans une optique d'amélioration de la performance. En outre, dans un vélo électrique, le dispositif de roulement tel que mentionné pourrait être utilisé pour l'asservissement en effort, optimisant ainsi l'assistance électrique en fonction de l'effort réel appliqué par l'utilisateur. Cela permettrait d'adapter la consommation électrique au besoin réel et ainsi de l'optimiser tout en améliorant le confort du cycliste.

Enfin, l'utilisation de transducteurs piézoélectriques donne également la possibilité de pouvoir récupérer l'énergie ou la puissance générée par les contraintes appliquées, rendant ainsi le système potentiellement économe, voire autonome, en énergie. Cela peut, dans certains cas, éliminer le besoin de sources d'énergie externes comme les piles ou les batteries, qui ont une autonomie limitée et nécessitent des recharges fréquentes.

Un autre avantage des transducteurs piézoélectriques est leur faible coût en lien avec la facilité de leur intégration à tous types de roulements. Cela permet d'envisager la commercialisation de tels dispositifs de roulement connectés pour un grand nombre d'applications.

### Roulement

Le roulement comporte avantageusement des éléments roulants, notamment des billes ou des cylindres entre la première et la deuxième bague configurés pour pouvoir tourner et permettre une rotation à frottement réduit de la première et la deuxième bague l'une par rapport à l'autre.

La première bague et la deuxième bague peuvent être l'une dans l'autre de sorte à former une bague externe et une bague interne entre lesquels les éléments roulants peuvent rouler pour faire tourner la bague externe et la bague interne l'une par rapport à l'autre, le au moins un transducteur s'étendant sur une surface cylindrique de la première bague. Dans ce cas, le au moins un transducteur piézoélectrique est de préférence configuré pour générer un signal lorsqu'une contrainte radiale lui est appliquée.

La première bague peut être la bague interne ou la bague externe.

De préférence, la première bague est interne et le au moins un transducteur s'étend sur une surface cylindrique de la première bague formant une surface cylindrique interne du roulement.

En variante, la première et la deuxième bague sont agencées longitudinalement l'une par rapport à l'autre de sorte à former une bague avant et une bague arrière entre lesquels les éléments roulants peuvent rouler pour faire tourner la bague avant et la bague arrière l'une par rapport à l'autre, le au moins un transducteur s'étendant sur une surface plane de la première bague formant une face avant ou une face arrière du roulement. Dans ce cas, le au moins un transducteur piézoélectrique est de préférence configuré pour générer un signal lorsqu'une contrainte longitudinale lui est appliquée.

### Transducteurs piézoélectriques

Le au moins un transducteur est notamment fixé directement ou indirectement sur la première bague.

De préférence, le dispositif de roulement comporte une pluralité de transducteurs piézoélectriques montés fixe par rapport à la première bague, configurés pour s'étendre entre la première surface et le support en étant répartis autour de la première bague et chacun configuré pour générer un signal lorsqu'il subit une contrainte selon un axe de mesure, notamment radial.

De préférence, au moins deux des transducteurs piézoélectriques sont agencés autour de la première bague pour générer un signal lorsqu'ils subissent des contraintes selon des axes de mesures différents et non parallèles, notamment radiaux. Ils sont en particulier agencés autour de la première bague en formant un angle non plat entre lesdits axes radiaux.

De préférence, les transducteurs piézoélectriques sont tous identiques.

En intégrant une pluralité de transducteurs piézoélectriques répartis uniformément autour de la première bague formant une bague interne ou externe, en particulier avec deux transducteurs piézoélectriques générant un signal sous contraintes selon des axes radiaux différents, il devient possible de déterminer la contrainte en deux dimensions, en particulier lorsque la contrainte est externe et non issue des vibrations du roulement. Cette configuration permet de déterminer non seulement l'amplitude de la contrainte, mais aussi sa direction réelle en croisant les signaux des différents transducteurs piézoélectriques agencés autour de la première bague. Cela offre une image complète et précise de la contrainte, contrairement à une mesure unidimensionnelle qui ne capte qu'une composante de la force. Cette configuration permet de mieux comprendre la distribution des forces appliquées, offrant ainsi une image plus complète et précise de la contrainte totale. La répartition uniforme des transducteurs autour de la première bague permet de capter les variations angulaires de la contrainte appliquée.

Par ailleurs, l'utilisation de plusieurs transducteurs piézoélectriques répartis autour de la première bague augmente la robustesse du système. En cas de défaillance d'un transducteur, les autres transducteurs peuvent continuer à fonctionner, assurant ainsi la continuité de la mesure. Cette redondance améliore la fiabilité globale du dispositif.

La répartition uniforme des transducteurs permet également de ne pas avoir à se poser la question du positionnement des transducteurs autour de la première bague. Quelle que soit l'orientation, le croisement des signaux des différents transducteurs permet de déterminer avec précision la contrainte. Dans ce cas, une calibration initiale du dispositif de roulement, notamment de l'unité de mesure de la contrainte, peut être nécessaire afin d'attribuer à chaque transducteur piézoélectrique une orientation dans l'espace par rapport à la deuxième bague et de pouvoir associer la mesure par chaque transducteur piézoélectrique à une orientation précalibrée.

Enfin, si cela est nécessaire, cela permet également une meilleure récupération de l'énergie ou de la puissance générée par la contrainte, notamment lorsqu'elle est issue d'une force extérieure appliquée sur le dispositif de roulement. Cette configuration maximise la surface de contact et l'efficacité de la conversion de l'énergie mécanique en énergie électrique, améliorant ainsi l'autonomie possible du système.

Dans le cas d'une première bague formant une bague avant ou arrière, le fait d'avoir plusieurs transducteurs piézoélectriques permet notamment d'augmenter le signal et donc d'avoir une mesure plus précise et performante de la contrainte. Dans le cas d'une mesure de vibration pour une application de détermination de l'usure du roulement ou de maintenance, cela permet notamment d'accéder à une mesure plus fine pour détecter des vibrations d'ampleur réduite.

De préférence, le dispositif de roulement comporte trois transducteurs piézoélectriques agencés uniformément autour de la première bague.

En variante, le dispositif de roulement comporte un unique transducteur piézoélectrique ou deux transducteurs piézoélectriques agencés en opposition par rapport à la première bague. Dans ce cas, le ou les transducteurs peuvent être agencés pour générer un signal lorsqu'il subit une contrainte selon :
- Un axe prédéterminé préféré selon l'application, notamment selon un axe correspondant à une mesure de contrainte utile selon l'application, par exemple dans le cas d'une pédale de vélo, cela peut être dans un axe perpendiculaire à une manivelle de la pédale reliant un axe de la pédale à un axe central de giration de la pédale, ou, dans le cas d'outils de déplacement à roue autre que le vélo, cela peut être un axe s'étendant le long de la surface de roulement, notamment le long de la route ou du chemin, dans le sens de déplacement de l'outil de déplacement, ou
- Un axe radial quelconque dans le cas d'une mesure de vibration du roulement.

Le ou les transducteurs piézoélectriques sont préférentiellement d'épaisseur inférieure ou égale à 5 mm, ou mieux inférieure ou égale à 3 mm. Cette caractéristique de transducteurs piézoélectriques de faibles épaisseurs offre des avantages en termes de réduction de l'encombrement, de maintien de la rigidité et de la robustesse, de facilité d'intégration et de compatibilité avec les techniques de fabrication avancées, rendant le système de mesure d'effort compacte et performante. En particulier, son faible encombrement est particulièrement important dans le contexte de l'intégration au sein du dispositif de roulement au niveau d'une bague interne, où l'espace est limité. Une épaisseur réduite facilite l'intégration des transducteurs sans compromettre la structure et la fonctionnalité du dispositif de roulement. Leur petite taille permet de les insérer dans des configurations complexes sans nécessiter de modifications majeures de la structure existante. Cela simplifie le processus d'intégration et réduit les coûts de fabrication. Par ailleurs, leur déformation sous charge est très faible, ce qui garantit que la structure de la pédale reste robuste et fiable, et ils permettent une grande sensibilité de mesure, ce qui permet d'assurer une bonne précision des mesures et offre une image détaillée de la contrainte totale et de la contrainte utile appliqué, le cas échéant.

Le ou les transducteurs piézoélectriques peuvent être en céramique, notamment en plomb zirconate titanate (PZT), en nitrure d'aluminium (AIN) et en oxyde de zinc (ZnO), ou en polymère, notamment en polyfluorure de vinylidène (PVDF). Les matériaux céramiques seront préférés, car ils permettent une grande rigidité et une faible déformation sous charge.

Le ou les transducteurs piézoélectriques peuvent être caractérisés en ce qu'ils sont configurés pour générer en outre de l'énergie.

### Entretoise

De préférence, le dispositif de roulement comporte une entretoise d'adaptation s'étendant entre le roulement mécanique et le ou les transducteurs piézoélectriques configurée pour permettre la fixation du ou des transducteurs piézoélectriques à la première bague.

Cela permet, dans le cas où la première bague est une bague interne ou externe, de pouvoir lier une surface plane du ou des transducteurs piézoélectriques à une surface cylindrique de la première bague. L'entretoise d'adaptation peut comporter une surface de section circulaire pour venir en contact de la première bague et une ou plusieurs plateformes planes sur la surface opposée pour fixer le ou les transducteurs piézoélectriques.

L'entretoise d'adaptation peut être fixée au roulement mécanique, notamment à la première bague, et/ou au(x) transducteur(s) piézoélectrique(s) par tout moyen, notamment par collage ou par assemblage précontraint, notamment par frettage thermique.

Dans le cas où la première bague est une bague interne ou externe, le ou les transducteurs et/ou l'entretoise peuvent s'étendre sur la largeur du roulement sur une largeur au moins égale à celle du roulement mécanique, de préférence supérieure.

Le dispositif de roulement peut comporter en outre des butées de reprise d'effort lorsque la contrainte appliquée sur le ou les transducteurs est supérieure à un seuil prédéterminé, notamment correspondant à une contrainte maximale acceptable au-delà de laquelle le ou les transducteurs risque de s'abimer. Une telle butée peut s'étendre sur la première bague entre la première bague et le support et présenter une épaisseur inférieure à celle du ou des transducteurs pour correspondre à la contrainte et/ou déformation maximale acceptable par le ou les transducteurs. La butée peut être une partie de l'entretoise ou être une pièce additionnelle montée sur l'entretoise, notamment un anneau.

### Unité de communication

Le dispositif peut comporter un système électronique séparé, notamment comportant l'unité de mesure, et une unité de communication configurée pour transmettre vers le système électronique séparé le ou les signaux du ou des transducteurs piézoélectriques et/ou des informations sur l'énergie générée et/ou la puissance électrique générée par le ou les transducteurs piézoélectriques. Cela permet notamment de déporter l'analyse des données sur un appareil externe qui peut comporter une alimentation électrique, notamment par batterie. Ainsi, cela réduit la consommation énergétique nécessaire aux mesures au niveau du dispositif de roulement, ce qui peut permettre de le rendre autonome par récupération de l'énergie ou de la puissance générée par le ou les transducteurs et optimisation de la consommation énergétique.

En variante, l'unité de mesure est reliée électroniquement au(x) transducteur(s) piézoélectrique(s). Dans ce cas, le dispositif peut comporter une unité de communication configurée pour transmettre les informations sur la contrainte générée par l'unité de mesure. L'unité de communication peut être caractérisée en ce qu'elle utilise une technologie de communication sans fil, telle que le Bluetooth, le Wi-Fi, l'ANT ou une autre technologie de communication radiofréquence, pour transmettre les données générées et/ou les signaux.

L'unité de communication peut être configurée pour envoyer des données en temps réel, permettant ainsi une surveillance en direct de la contrainte.

En variante ou de façon complémentaire, le dispositif peut comporter un système de stockage temporaire des données, permettant de conserver les données, notamment en l'absence d'unité de communication, en cas d'envoi de données par paquet ou en cas de perte de connexion avec le dispositif externe, et de les transmettre ultérieurement lorsque la connexion est rétablie.

### Unité de mesure

Le système électronique séparé peut être un boitier de traitement des données ou un outil de traitement numérique, de préférence un ordinateur comportant un programme d'ordinateur adapté ou une application à installer sur un appareil externe, notamment un téléphone ou une tablette, configuré pour communiquer avec l'unité de communication.

L'unité de mesure déduit de préférence pour le ou chaque signal généré par le ou les transducteurs ou à partir des informations de l'énergie ou de la puissance générée une valeur de la contrainte mesurée selon l'axe de mesure correspondant à le ou chaque transducteur piézoélectrique.

Le dispositif de roulement peut comporter une horloge interne et/ou un oscillateur configuré pour déclencher les mesures et/ou la prise d'échantillon de mesure.

### Contrainte extérieure

L'unité de mesure peut être configurée pour déterminer la valeur d'une contrainte utile, c'est-à-dire de la contrainte appliquée selon un axe prédéterminé, correspondant notamment à un axe de mouvement du dispositif, notamment à un axe de rotation d'une manivelle de pédalage dans le cas d'une pédale de vélo ou à un axe de déplacement d'un outil de déplacement à roue pour les autres outils. Cette détermination peut être réalisée par mesure directe à partir du signal généré par un transducteur piézoélectrique configuré pour générer un signal selon la contrainte exercée sur cet axe ou par croisement des valeurs de la contrainte mesurées selon les axes de mesure de différents transducteurs différents de l'axe utile, par analyse de l'énergie générée par le ou les transducteurs et/ou par analyse de la puissance électrique moyenne récupérée, notamment stockée ou dissipée, notamment dans une charge électrique ou par l'unité de mesure elle-même.

Dans le cas d'une pluralité de transducteurs piézoélectriques positionnés de façon adaptée, l'unité de mesure peut être configurée pour déterminer la valeur et la direction de la contrainte appliquée par croisement des valeurs de la contrainte mesurées selon les axes de mesure des différents transducteurs, par analyse de l'énergie générée par les transducteurs et/ou par analyse de la puissance électrique moyenne récupérée, notamment stockée, ou dissipée, notamment dans une charge électrique ou par l'unité de mesure elle-même.

L'unité de mesure peut être configurée pour déterminer la ou les informations sur la contrainte à une fréquence prédéterminée fixe ou variable. La fréquence prédéterminée peut être dépendant de la vitesse de rotation du roulement. Dans ce cas, elle peut être variable. En variante, elle est fixe et elle dépend de l'application et du type de contrainte mesurée.

### Unité de gestion d'énergie électrique

Le dispositif de roulement peut comporter une unité de gestion d'énergie électrique configurée pour récupérer au moins une partie de l'énergie ou de la puissance générée par le ou les transducteurs piézoélectriques. Elle peut la stocker pour alimenter au moins partiellement l'unité de mesure et/ou l'unité de communication et/ou alimenter électriquement un système électrique externe, notamment un clignotement, un tracker GPS autonome, un cadencement autonome ou un autre système de mesure. Cela peut être recherché lorsque la contrainte exercée est issue de l'extérieur du dispositif de roulement.

L'unité de gestion d'énergie électrique peut comporter un système de stockage capacitif destiné à stocker au moins une partie de l'énergie électrique générée par le ou les transducteurs piézoélectriques.

L'unité de gestion d'énergie peut être configurée pour générer des informations d'énergie ou de puissance générée par le ou les transducteurs. Elle peut incrémenter au moins un compte binaire lorsque la tension aux bornes dudit élément de stockage capacitif atteint une valeur seuil ou une valeur de référence maximale de sorte que ledit au moins un compte binaire représente l'image de la contrainte appliquée entre le roulement et le support. L'unité de gestion d'énergie peut également enregistrer la durée entre deux incréments du compte binaire. En variante, l'unité de gestion est configurée pour incrémenter le compte binaire à période temporelle fixe et pour enregistrer la tension aux bornes de l'élément de stockage entre deux incréments. Ces enregistrements ne sont pas des mesures directes des contraintes appliquées, l'information obtenue par ce compte binaire est par exemple liée au temps d'application des contraintes ou à son amplitude. Ainsi, le compte binaire peut être utilisé pour estimer la contrainte mais aussi la durée de la contrainte. Le circuit de traitement électronique peut comporter une mémoire non volatile connectée à ladite unité de gestion d'énergie, ladite unité de gestion d'énergie étant configurée pour inscrire en mémoire ledit au moins un compte binaire.

Le dispositif de roulement peut comporter une alimentation électrique pour alimenter électriquement l'unité de mesure pour l'analyse des signaux du ou des transducteurs piézoélectriques et/ou l'unité de communication pour communiquer les données générées vers l'extérieur. L'alimentation électrique peut être une batterie rechargeable ou à pile. Une telle batterie peut alimenter électriquement l'unité de mesure pour l'analyse des signaux du ou des transducteurs piézoélectriques et/ou l'unité de communication pour communiquer les données générées vers l'extérieur.

### Vibration du roulement

Dans le cas de la détection d'une vibration du roulement, l'unité de mesure peut être configurée pour déterminer une fréquence et une amplitude moyenne de vibration du roulement à partir du ou des signaux émis par le ou les transducteurs piézoélectriques. Dans ce cas, l'unité de mesure peut relever un échantillon de mesures à haute fréquence à période prédéterminée fixe ou variable. Cela permet un suivi de la vibration du roulement dans le temps. La période peut dépendre de l'utilisation du roulement et de son usure présumée.

### Procédé

L'invention a également pour objet un procédé de mesure des contraintes selon au moins un axe de mesure entre le roulement et le support d'un dispositif de roulement tel que décrit précédemment comportant la détermination d'une contrainte selon le au moins un axe de mesure à partir du signal ou des signaux électriques générés par le ou les transducteurs piézoélectriques et/ou de l'énergie ou de la puissance générée par le ou les transducteurs piézoélectriques.

Le procédé comporte les caractéristiques décrites précédemment indépendamment ou en combinaison les unes avec les autres.

La contrainte peut être une contrainte appliquée sur le support ou le dispositif au moins partiellement selon l'axe de mesure.

Elle peut être d'intensité constante ou non. Elle peut être de direction par rapport au roulement constante ou non. Elle est notamment sensiblement périodique avec une fréquence fixe ou variable.

La contrainte mesurée peut être un effort appliqué par un utilisateur ou par un mécanisme externe ou une contrainte de vibration appliquée par le roulement lui-même.

L'invention a également pour objet un procédé de mesure de l'usure du roulement mécanique d'un dispositif de roulement tel que décrit précédemment ou d'un élément périphérique au roulement d'un dispositif de roulement tel que décrit précédemment, comportant la mise en rotation du roulement mécanique à une fréquence prédéterminée, la détermination d'un taux de vibration du roulement à ladite fréquence prédéterminée à partir du signal ou des signaux générés par le ou les transducteurs piézoélectriques et la détermination de l'usure du dispositif de roulement ou d'un élément périphérique au roulement en fonction du taux de vibration déterminé.

Le procédé comporte les caractéristiques décrites précédemment indépendamment ou en combinaison les unes avec les autres.

Cela est particulièrement utile dans le cas d'une surveillance des roulements d'un dispositif industriel ou dans le cadre de la surveillance de roulement d'un outil de déplacement à roue.

Cela peut par exemple permettre de mesurer l'usure ou la défaillance d'éléments périphériques au roulement, par exemple sur une machine-outil ou une fraiseuse où on pourrait être capable de mesurer la force nécessaire pour déplacer l'outil tournant dans la matière et remonter l'outil lorsque la force est anormal et donc significative d'une usure de l'outil, ou asservir la vitesse de déplacement de l'outil pour maintenir les contraintes radiales sous un certain niveau.

Le procédé peut comporter l'émission d'une alerte, notamment sonore et/ou visuel, lorsque le taux de vibration dépasse une valeur seuil prédéterminée. L'alerte peut être directement sur le dispositif de roulement via un organe d'alerte utilisateur directement sur le roulement ou sur le système électronique externe. En variante, l'alerte utilisateur peut être émise sur un dispositif externe en communication avec le dispositif de roulement via l'unité de communication.

L'invention a également pour objet un procédé de procédé d'asservissement d'une alimentation électrique d'assistance électrique d'un effort sur le roulement d'un dispositif de roulement tel que décrit précédemment comportant la détermination de l'effort appliqué sur le roulement, le déclenchement d'un niveau d'assistance électrique à l'effort lorsque l'effort déterminé dépasse une valeur seuil prédéfinie dudit niveau d'assistance électrique.

Le procédé comporte les caractéristiques décrites précédemment indépendamment ou en combinaison les unes avec les autres.

Un tel procédé est particulièrement utile dans le cadre d'une application sur un vélo à assistance électrique, car il permet en temps réel de déterminer l'effort et d'adapter l'assistance électrique à l'effort. Il peut également être utile dans un cadre industriel d'asservissement nécessitant, au-delà d'un certain seuil d'effort, une assistance électrique.

### Brève description des dessins

[Fig 1] représente schématiquement un exemple de dispositif de roulement monté sur un support,
[Fig 2] représente schématiquement une variante de dispositif de roulement, et
[Fig 3] représente schématiquement une variante de dispositif de roulement.

### Description détaillée

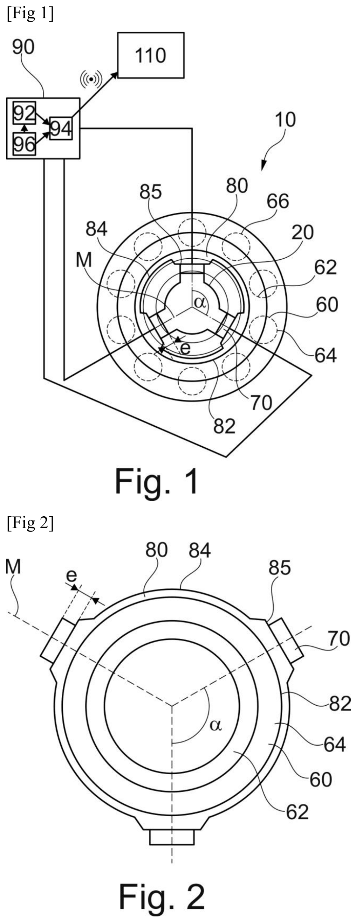

On a illustré sur les figures 1 à 5 un exemple de dispositif de roulement 10 selon l'invention.

Le dispositif de roulement 10 comporte un roulement mécanique 60 et des transducteurs piézoélectriques 70 s'étendant entre le roulement mécanique 60 et un support 20.

Le roulement mécanique 60 est un composant circulaire comportant une bague intérieure 62 et une bague extérieure 64 et des éléments roulants 66, tels que des billes ou des rouleaux, entre la bague intérieure 62 et la bague extérieure 64 pour permettre une rotation fluide entre les deux bagues 62 et 64. Le roulement peut être de toute forme connue.

Les transducteurs piézoélectriques 70 s'étendent sur une des deux bagues 62 et 64. Dans l'exemple illustré en figure 1, ils s'étendent sur la bague intérieure 62 et sont fixes par rapport à celle-ci, et dans l'exemple illustré sur la figure 2, ils s'étendent sur la bague extérieure 64 et sont fixes par rapport à celle-ci. Le positionnement des transducteurs peut dépendre de différents paramètres, notamment de l'encombrement ou de la configuration du dispositif général dans lequel le dispositif de roulement est intégré. Les transducteurs piézoélectriques 70 sont fixés directement ou indirectement sur la bague intérieure 62 ou sur la bague extérieure 64 d'un côté

Les transducteurs piézoélectriques 70 permettent chacun de mesurer la contrainte entre le support 20 et le roulement 70 selon un axe de mesure M qui leur est propre, ici un axe radial au roulement 70. Cette contrainte peut être issue d'une contrainte extérieure appliquée sur le roulement 70 ou sur le support 20 directement ou indirectement ou d'une vibration interne du roulement 70 durant sa rotation. Ils peuvent être configurés pour générer un signal électrique proportionnel à la contrainte subie lorsqu'une contrainte est présente.

Les transducteurs piézoélectriques 70 peuvent être fixés sur la bague correspondante, la bague intérieure 62 sur la figure 1 et la bague extérieure 64 sur la figure 2, par l'intermédiaire d'une entretoise de fixation 80. L'entretoise de fixation 80 comporte une surface de section circulaire 82 pour venir en contact avec une des bagues du roulement, la bague intérieure 62 sur la figure 1 et la bague extérieure 64 sur la figure 2, et des plateformes planes 85 sur sa surface opposée 84 pour fixer les transducteurs piézoélectriques 70 plans à la surface circulaire de la bague correspondante. Il est à noter que l'invention n'est bien évidemment pas limitée à des transducteurs de face plane ou à la configuration mentionnée.

L'entretoise de fixation 80 et les transducteurs 70 peuvent être fixés à la bague correspondante par tout moyen, notamment par collage entre eux et à la bague correspondante et/ou par assemblage précontraint, notamment par frettage thermique.

Les transducteurs 70 peuvent tous être identiques. Ils peuvent comporter une épaisseur e inférieure ou égale à 1 cm, mieux inférieure ou égale à 5 mm, encore mieux inférieure ou égale à 2 mm.

Dans l'exemple illustré, les transducteurs 70 présentent une largeur le long de l'axe 30 sensiblement égale à celle du roulement 60 le long de cet axe. Cependant, il pourrait en être autrement. Ils pourraient par exemple être d'une largeur plus importante que le roulement 60. Il peut en être de même pour l'entretoise 80.

Les transducteurs 70 peuvent être en céramique, notamment en plomb zirconate titanate (PZT), en nitrure d'aluminium (AIN) et en oxyde de zinc (ZnO), ou en polymère, notamment en polyfluorure de vinylidène (PVDF).

Dans les deux exemples des figures 1 et 2, le dispositif de roulement comporte trois transducteurs piézoélectriques 70 uniformément répartis autour de la bague correspondante. Ils forment entre eux un angle α de 120°. Cette configuration permet une mesure de la contrainte quelle que soit l'orientation du roulement autour de son axe. Il est ainsi possible, par croisement des signaux émis par les transducteurs piézoélectriques 70, de déterminer précisément la direction et la valeur de la contrainte exercée.

Le ou les transducteurs électroniques 70 sont reliés électriquement à un circuit électronique 90, illustré sur la figure 5, configuré pour traiter les signaux des transducteurs piézoélectriques 70 et/ou collecter l'énergie qu'ils génèrent. Il peut se présenter sous la forme d'une carte électronique. Il peut comporter une unité de mesure 92 pour analyser les signaux et/ou l'énergie ou de la puissance générée par les transducteurs 70, une unité de communication 94 pour transmettre les données générées vers l'extérieur, et/ou une unité de gestion d'énergie électrique 96 pour récupérer et stocker l'énergie ou la puissance générée par au moins une partie des transducteurs piézoélectriques 70.

L'unité de gestion de l'énergie 96 peut permettre de gérer l'énergie générée par les transducteurs piézoélectriques 70. Elle peut comporter un système de stockage capacitif, non représenté, dans laquelle elle peut stocker au moins une partie de l'énergie électrique générée par les transducteurs piézoélectriques 70 avant son utilisation pour alimenter au moins partiellement l'unité de mesure 92 et/ou l'unité de communication 94 et/ou alimenter électriquement un élément électrique additionnel, notamment dédié au roulement, par exemple, de façon non limitative, des capteurs de pulsation, de température, de vibration, ou une signature sonore .

L'unité de gestion d'énergie 96 peut être configurée pour incrémenter un compte binaire lorsque la tension aux bornes de l'élément de stockage atteint une valeur seuil prédéterminée. Dans ce cas, l'unité de gestion d'énergie peut également enregistrer la durée entre deux incréments successifs de la valeur seuil. En variante, l'unité de gestion incrémente le compte binaire à intervalle de temps constant prédéfini et enregistre la tension aux bornes de l'élément de stockage à chaque incrément. Ainsi, le compte binaire peut être utilisé pour estimer la contrainte mais aussi la durée de la contrainte. Le circuit de traitement électronique peut comporter une mémoire non volatile connectée à ladite unité de gestion d'énergie, ladite unité de gestion d'énergie étant configurée pour inscrire en mémoire ledit au moins un compte binaire. Ces informations enregistrées constituent des informations sur l'énergie ou la puissance électrique générée par les transducteurs piézoélectriques.

L'unité de communication 94 est configurée pour transmettre les données recueillies ou générées sur la contrainte vers un système électronique externe 110. L'unité de communication 94 peut être caractérisée en ce qu'elle utilise une technologie de communication sans fil, telle que le Bluetooth, le Wi-Fi ou une autre technologie de communication radiofréquence, pour transmettre les données générées et/ou les signaux. Elle peut être configurée pour envoyer des données en temps réel, permettant ainsi une surveillance en direct de la contrainte par l'utilisateur. En variante ou de façon complémentaire, le circuit électronique 90 peut comporter un système de stockage temporaire des données, permettant de conserver les données en l'absence d'unité de communication ou en cas de perte de connexion avec le système électronique externe 110, et de les transmettre ultérieurement lorsque la connexion est rétablie.

L'unité de mesure 92 est configurée pour recevoir les signaux des transducteurs électroniques 70 et/ou des informations sur l'énergie ou la puissance générée par le ou les transducteurs piézoélectriques 70, notamment générées par l'unité de gestion d'énergie 96.

Le circuit électronique 90 peut comporter une alimentation électrique additionnelle non représentée pour alimenter électriquement au moins partiellement l'unité de mesure 92 et l'unité de communication 94. L'alimentation électrique 97 peut être une batterie rechargeable ou à pile.

Dans le cas des modes de réalisation des figures 1 et 2, lors de l'application d'une contrainte entre le roulement 60 et le support 20, que la contrainte soit due au roulement ou issue de l'application d'une force par un organe extérieur, au moins une partie des transducteurs 70 sont comprimés selon un axe radial entre le roulement 60 et le support 20. Ils génèrent alors un signal électrique, notamment proportionnel à la force radiale subie, qui est récupéré, pour chaque transducteur 70, par le circuit électronique 90.

Avec chaque signal, l'unité de mesure 92 détermine la contrainte perçue selon l'axe radial correspondant pour chaque transducteur 70. A partir de ces informations, elle peut en déduire la contrainte générale appliquée entre le roulement et le support, notamment sa direction et son intensité, et/ou une intensité de contrainte selon une direction utile particulière, en croisant les informations déterminées pour les différents transducteurs 70. La direction utile peut varier selon le domaine d'application. Elle peut notamment dépendre du mouvement recherché. Par exemple, dans le cas d'une application à une pédale de vélo, elle peut être selon un axe perpendiculaire à l'axe d'une manivelle de la pédale. Dans le cas d'une application à un skate ou de rollers, elle peut être selon un axe parallèle à la route. En parallèle, l'organe de gestion d'énergie 96 peut stocker l'énergie des transducteurs 70 et la distribuer dans le circuit électronique 90 selon les besoins des différents éléments. Dans le cas où l'énergie stockée est insuffisante, le circuit électronique peut alimenter le complément avec l'alimentation électrique additionnelle. L'organe de gestion d'énergie peut également générer des informations sur cette énergie qu'elle peut transmettre à l'unité de mesure 92 pour déterminer des informations sur la contrainte, notamment une puissance utile moyenne générée par tour du roulement. L'ensemble des informations générées par l'unité de mesure 92 peut être transmis vers le système extérieur 110 via l'unité de communication 94 par communication sans fil. Cette communication peut se faire en temps réel à chaque prise de mesure, à la fin de chaque tour de roulement ou de façon périodique par stockage interne de l'information avant transmission. En variante, les informations sont stockées dans un système de stockage interne et le circuit électronique 90 est dépourvu d'unité de communication. L'utilisateur peut alors régulièrement récupérer les informations par connexion du dispositif externe au système de stockage.

Ces mesures permettent plusieurs choses selon les applications. Dans le cas d'un outil de déplacement personnel, elles peuvent permettre d'avoir des données sur sa performance. Dans le cas d'un vélo à assistance électrique, elles peuvent permettre en outre de déterminer un niveau d'effort et d'appliquer un niveau d'assistance électrique en fonction de la contrainte mesurée. Dans le cas d'une machine industrielle, elle peut permettre de déterminer une contrainte en deçà ou au-delà d'un seuil pour enclencher une opération particulière, notamment une opération de maintenance, automatiquement ou via une alerte utilisateur.

L'unité de mesure est ici présentée comme étant interne au circuit électronique. Cependant, elle pourrait être déportée dans le système externe 110. Auquel cas, l'unité de communication transmet au système externe l'ensemble des données permettant la détermination de la contrainte selon les axes radiaux des transducteurs 70.

Dans le cas d'une mesure de vibration, la contrainte est alors générée par le roulement. La vibration du roulement génère une contrainte sur les transducteurs 70 qui génèrent un signal. L'unité de mesure peut déduire de ces signaux un taux de vibration en déterminant l'amplitude maximale ou moyenne de vibration et une fréquence de vibration par exemple. Lorsque ce taux de vibration dépasse un niveau, le dispositif de roulement peut être configuré pour générer un alerte vers l'utilisateur qui peut alors changer le roulement.

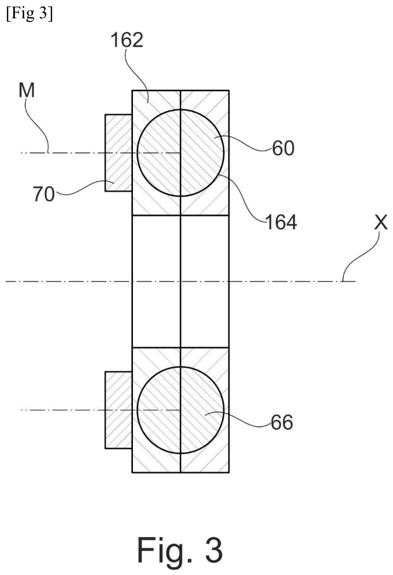

Le mode de réalisation de la figure 3 diffère de celui des figures 1 et 2 en ce que le roulement 60 ne comporte pas une bague intérieure et une bague extérieure, mais comporte une bague avant 162 et une bague arrière 164. Les transducteurs 70 peuvent alors être fixés sur la bague avant 162 ou la bague arrière 164 et permettent une mesure d'une contrainte longitudinale selon un axe M parallèle à l'axe du roulement X.

En variante non illustrée, le dispositif de roulement 10 peut comporter un unique transducteur. Ce dernier peut être positionné pour mesurer une contrainte selon une direction fixe particulière, notamment selon une direction correspondant à une contrainte utile dans le cas d'une mesure d'une contrainte issue de l'extérieur. En variante, il n'a pas de position préférentielle, en particulier dans le cas d'une mesure de vibration du roulement.

L'invention n'est pas limitée aux exemples qui viennent d'être décrits. Les modes de réalisation peuvent être combinés entre eux lorsqu'ils sont compatibles.

Les modes de réalisations illustrées présentent trois transducteurs positionnés autour de la bague en étant régulièrement répartis. Néanmoins, l'invention n'est pas limitée à une telle configuration et un nombre différent de transducteurs régulièrement répartis autour de la bague ou non est possible.

## Revendications

1. Dispositif de roulement configuré pour être monté sur un support (20) s'étendant selon un axe longitudinal, le dispositif comportant :
- un roulement mécanique (60) comportant une première et une deuxième bague (62, 64, 162, 164) opposées et rotatives entre elles, la première bague (62, 64, 162, 164) étant configurée pour être fixe en rotation par rapport à un support (20) s'étendant selon un axe longitudinal,
- au moins un transducteur piézoélectrique (70) monté fixe par rapport à la première bague (62, 64, 162, 164), configuré pour s'étendre entre la première bague (62, 64, 162, 164) et le support (20) et configuré pour générer un signal lorsqu'il subit une contrainte selon un axe de mesure (M) et pour générer de l'énergie,
- une unité de mesure électronique (92) configurée pour recevoir le signal généré par le transducteur piézoélectrique (70) et en déduire au moins une information sur la contrainte selon l'axe de mesure (M) s'appliquant entre la première bague (62, 64, 162, 164) et le support (20),
- une unité de gestion d'énergie électrique configurée pour récupérer au moins une partie de l'énergie ou de la puissance générée par le ou les transducteurs piézoélectriques.

2. Dispositif selon la revendication 1, comportant une pluralité de transducteurs piézoélectriques (70) montés fixe par rapport à la première bague (62, 64, 162, 164), configurés pour s'étendre entre la première surface (72) et le support (20) en étant répartis autour de la première bague (62, 64, 162, 164) et chacun configuré pour générer un signal lorsqu'il subit une contrainte selon un axe de mesure (M).

3. Dispositif selon la revendication 2, au moins deux des transducteurs piézoélectriques (70) sont agencés autour de la première bague (62, 64, 162, 164) pour générer un signal lorsqu'ils subissent des contraintes selon des axes de mesures (M) différents et non parallèles, notamment radiaux.

4. Dispositif selon l'une quelconque des revendications précédentes, dans lequel le ou les transducteurs piézoélectriques (70) sont d'épaisseur inférieure ou égale à à 5 mm, ou mieux inférieure ou égale à 2 mm.

5. Dispositif selon l'une quelconque des revendications précédentes, dans lequel le ou les transducteurs piézoélectriques (70) sont en céramique, notamment en plomb zirconate titanate (PZT), en nitrure d'aluminium (AIN) et en oxyde de zinc (ZnO), ou en polymère, notamment en polyfluorure de vinylidène (PVDF)

6. Dispositif selon l'une quelconque des revendications précédentes, comportant une entretoise d'adaptation (80) s'étendant entre le roulement mécanique (60) et le ou les transducteurs piézoélectriques (70) configurée pour permettre la fixation du ou des transducteurs piézoélectriques (70) à la première bague (62, 64, 162, 164).

7. Dispositif selon la revendication précédente, dans lequel l'entretoise d'adaptation (80) comporte une surface de section circulaire (82) pour venir en contact de la première bague (62, 64, 162, 164) et une ou plusieurs plateformes planes (85) sur la surface opposée (84) pour fixer le ou les transducteurs piézoélectriques (70).

8. Dispositif selon l'une quelconque des revendications précédentes, comportant un système électronique séparé (110), et une unité de communication (94) configurée pour transmettre vers le système électronique séparé (110) le ou les signaux du ou des transducteurs piézoélectriques (70) et/ou des informations sur l'énergie et/ou la puissance électrique générée par le ou les transducteurs piézoélectriques (70).

9. Dispositif selon l'une quelconque des revendications précédentes, dans lequel l'unité de mesure (92) est configurée pour déterminer la valeur d'une contrainte utile, c'est-à-dire de la contrainte appliquée selon un axe prédéterminé, correspondant notamment à un axe de mouvement du dispositif, notamment à un axe de rotation d'une manivelle de pédalage dans le cas d'une pédale de vélo ou à un axe de déplacement d'un outil de déplacement à roue pour les autres outils.

10. Dispositif selon l'une quelconque des revendications précédentes, dans lequel l'unité de mesure (92) est configurée pour déterminer une fréquence et une amplitude moyenne de vibration du roulement (60) à partir du ou des signaux émis par le ou les transducteurs piézoélectriques (70).

11. Procédé de mesure des contraintes selon au moins un axe de mesure entre le roulement (60) et le support (20) d'un dispositif de roulement (10) tel que décrit précédemment comportant la détermination d'une contrainte selon le au moins un axe de mesure à partir du signal ou des signaux électriques générés par le ou les transducteurs piézoélectriques (70) et/ou de l'énergie ou de la puissance générée par le ou les transducteurs piézoélectriques (70).

12. Procédé de mesure de l'usure du roulement mécanique (60) d'un dispositif de roulement (10) tel que décrit précédemment ou d'un élément périphérique au roulement d'un dispositif de roulement tel que décrit précédemment, comportant la mise en rotation du roulement mécanique (60) à une fréquence prédéterminée, la détermination d'un taux de vibration du roulement (60) à ladite fréquence prédéterminée à partir du signal ou des signaux générés par le ou les transducteurs piézoélectriques (70) et la détermination de l'usure du dispositif de roulement (10) ou d'un élément périphérique au roulement en fonction du taux de vibration déterminé.

13. Procédé d'asservissement d'une alimentation électrique (97) d'assistance électrique d'un effort sur le roulement (60) d'un dispositif de roulement (10) tel que décrit précédemment comportant la détermination de l'effort appliqué sur le roulement (60), le déclenchement d'un niveau d'assistance électrique à l'effort lorsque l'effort déterminé dépasse une valeur seuil prédéfinie dudit niveau d'assistance électrique.
